# EUROPÄISCHE PATENTANMELDUNG

(11) **EP 0 951 981 A2**
(43) Veröffentlichungstag der Anmeldung: **27.10.1999**
(21) Anmeldenummer: 99104258.1
(22) Anmeldetag: 03.03.1999
(51) Int. Cl.: B29C 35/00

(54) **Mehrkreistemperiersystem**

(30) Priorität: 23.04.1998 DE 19818131
(71) Anmelder: gwk Gesellschaft Wärme Kältetechnik mbH, 58566 Kierspe (DE)
(72) Erfinder: JUNG, Reinhold, 58566 Kierspe (DE)
(74) Vertreter: Köchling, Conrad, Dipl.-Ing.

(57) **Zusammenfassung**

Um ein Mehrkreistemperiersystem zur Temperierung von Verbrauchern, insbesondere Werkzeugen für die Spritzgußtechnik mit an Temperierkanäle der Verbraucher anschließbaren Temperiergeräten mit Kühlmittelanschluß, Elektroanschluß, Umpumpeinrichtung, Heizung, Kühlung und Regelung für jeden Temperierkreis beziehungsweise -kanal, zu schaffen, bei dem Einzelkomponenten leicht auswechselbar sind, Ergänzungen des Temperiersystems in einfacher Weise möglich sind und bei dem für den Anwender Möglichkeiten bestehen, die Komponenten des Temperiersystems an unterschiedlichen Installationsorten anzuordnen, wird vorgeschlagen, daß das Temperiersystem modulartig aufgebaut ist und aus folgenden Bestandteilen besteht:

Temperiergerät-Hydraulikeinheiten (1),Temperiergerät-Elektroeinheiten (2), einem Hydraulikbus (3) für Zu- und Ableitung von Temperiermittel, einem Elektrobus (4) mit elektrischen Zu- und Ableitungen, wobei mehrere Temperiergerät-Elektroeinheiten (2) an den Elektrobus (4) leicht lösbar ankoppelbar sind, die Temperiergerät-Elektroeinheiten (2) leicht lösbar mit den Temperiergerät-Hydraulikeinheiten (1) direkt oder über Anschlußkabel kuppelbar sind und die Temperiergerät-Hydraulikeinheiten (1) leicht lösbar an den Hydraulikbus (3) ankoppelbar sind, der an die Temperierkanäle (5.1) des oder der Verbraucher (5) angeschlossen ist.

## Beschreibung

Die Erfindung betrifft ein Mehrkreistemperiersystem zur Temperierung von Verbrauchern, insbesondere Werkzeugen für die Spritzgußtechnik mit an Temperierkanäle der Verbraucher anschließbaren Temperiergeräten mit Kühlmittelanschluß, Elektroanschluß, Umpumpeinrichtung, Heizung, Kühlung und Regelung für jeden Temperierkreis beziehungsweise -kanal.

Solche Mehrkreistemperiersysteme sind für die Temperierung insbesondere von Kunststoffspritzwerkzeugen notwendig. Das Spritzgießen von großflächigen und komplizierten Kunststoffteilen stellt hohe Anforderungen an die Werkzeugtemperierung. Da es sich hierbei immer um große und schwere Werkzeuge handelt, werden von den Temperiergeräten große Leistungen verlangt, um in genügend kurzer Zeit das Werkzeug auf die geforderte Produktionstemperatur zu bringen, wobei andererseits beim Spritzvorgang in verschiedenen Bereichen des Spritzlings unterschiedlich und feinfühlig Wärme übertragen werden muß. Um diese divergierenden Forderungen erfüllen zu können, werden die Werkzeuge mit einer Vielzahl von Kanälen ausgestattet, über die das Werkzeug dann im Bereich jedes Kanals individuell mit einer entsprechenden Anzahl von Temperiereinheiten temperiert werden kann. Für eine schnelle Änderung des Temperaturniveaus des gesamten Werkzeuges, zum Beispiel beim Aufheizen, steht die Summe der Heiz- und Kühlleistungen aller Temperiereinheiten zur Verfügung.

Im Stand der Technik ist ein Mehrkreistemperiersystem bekannt, bei dem sämtliche Einzelelemente zu einer gesamten Funktionseinheit in einem gemeinsamen Gehäuse untergebracht sind. Nachteil des bekannten Systems ist, daß dann, wenn eine Systemkomponente ausfällt, die ausgewechselt werden muß oder repariert werden muß, das gesamte Mehrkreistemperiersystem stillgelegt werden muß, da die komplette Einheit dann von dem Werkzeug abgekoppelt werden muß und entsprechende Reparaturmaßnahmen durchgeführt werden können.

Desweiteren ist nachteilig, daß das Temperiersystem auf die vom Hersteller vorgegebene Anzahl von Temperierkreisen beschränkt ist und nachträglich nicht oder nur mit erheblichem Aufwand um weitere Temperierkreise erweitert werden kann.

Ausgehend von diesem Stand der Technik liegt der Erfindung die Aufgabe zugrunde, ein Mehrkreistemperiersystem gattungsgemäßer Art zu schaffen, bei dem Einzelkomponenten leicht auswechselbar sind, Ergänzungen des Temperiersystems in einfacher Weise möglich sind und bei dem für den Anwender Möglichkeiten bestehen, die Komponenten des Temperiersystems an unterschiedlichen Installationsorten anzuordnen.

Zur Lösung dieser Aufgabe wird vorgeschlagen, daß das Temperiersystem modulartig aufgebaut ist und aus folgenden Bestandteilen besteht: Temperiergerät-Hydraulikeinheiten, TemperiergerätElektroeinheiten, einem Hydraulikbus für Zu- und Ableitung von Temperiermittel, einem Elektrobus mit elektrischen Zu- und Ableitungen, wobei mehrere Temperiergerät-Elektroeinheiten an den Elektrobus leicht lösbar ankoppelbar sind, die Temperiergerät-Elektroeinheiten leicht lösbar mit den Temperiergerät-Hydraulikeinheiten direkt oder über Anschlußkabel kuppelbar sind und die Temperiergerät-Hydraulikeinheiten leicht lösbar an den Hydraulikbus ankoppelbar sind, der an die Temperierkanäle des oder der Verbraucher angeschlossen ist.

Bevorzugte Weiterbildungen sind in den Unteransprüchen angegeben.

Die Erfindung stellt ein Mehrkreistemperiersystem zur Verfügung, welches aus Einzelmodulen aufgebaut ist. Dabei ist es lediglich erforderlich, den Hydraulikbus nahe des Verbrauchers, beispielsweise des Werkzeuges mit den entsprechenden Temperierkanälen zu installieren, wobei die Installation beispielsweise an einer Konsole vor dem Werkzeug oder auch an einer Halterung angebracht sein kann, die an dem Werkzeug befestigt ist. An diesen Hydraulikbus können die Temperiergerät-Hydraulikeinheiten in einfacher Weise angeschlossen werden, beispielsweise durch Steckkupplungen mit Verriegelungselementen. Der Elektrobus und die mit dem Elektrobus ebenfalls steckverbindbaren Temperiergeräte-Elektroeinheiten können an einem anderen Ort, beispielsweise auch Zentrale in einer Steuerzentrale installiert werden, wobei lediglich eine elektrische Leitungsverbindung zwischen der Temperiergerät-Elektroeinheit und der Temperiergerät-Hydraulikeinheit hergestellt werden muß. Diese elektrischen Zuleitungen können ebenfalls als Steckverbindung ausgebildet sein. Die Ausbildung des Mehrkreistemperiersystemes ermöglicht es, im Falle eines Defektes einer einzelnen Komponente lediglich den von dieser Komponente gesteuerten Temperierkanal zu sperren und die Komponente auszuwechseln, ohne daß die anderen Elemente des Mehrkreistemperiersystemes stillgelegt werden müßten. Dadurch, daß die Verbindung der einzelnen Komponenten durch Steckkupplungen erfolgt, ist eine einfache Ankupplung und Abkupplung möglich. Sofern für eine bestimmte Temperierung eine Temperiererät-Hydraulikeinheit anderer Leistung erforderlich ist, so kann ein einfacher Austausch des einen Moduls gegen ein anderes Modul erfolgen.

Das erfindungsgemäße Mehrkreistemperiersystem zeichnet sich durch eine kompakte, platzsparende Bauweise aus, wobei die Installation an der Verarbeitungsmaschine, zum Beispiel an der Spritzgießmaschine in einfacher Weise möglich ist. Aufgrund der leichten Auswechselbarkeit der Einzelkompenente kann im Falle des Ausfalls einer Komponente kein Ausfall des gesamten Mehrkreistemperiersystems erfolgen, auch wenn Einzelkomponenten ersetzt oder repariert werden müssen. Es können Einzelmodule ausgewechselt werden, so daß der Austausch von Modulen beispielsweise mit geringerer Leistung gegen Module mit höherer Leistung möglich ist. Es können auch zur Leistungserhöhung für große Verbraucherkreise zwei oder mehr Temperierkreise zusammengeschaltet werden.

Durch die Ausgestaltung der voneinander unabhängigen Bussysteme für Hydraulik und für Elektroinstallation ist eine Installation an unterschiedlichen Stellen möglich, so daß die Hydraulikeinheiten nahe am Verbraucher und die Elektroeinheit an einer für die Bedienung und Kontrolle günstigen Stelle erfolgen kann. Die Anzahl der an einem Bus installierten Kreise kann theoretisch unbegrenzt sein, wobei auch die Einspeisung und Ablaßmöglichkeit von Kühlwasser beispielsweise an beiden Enden des Hydraulikbusses erfolgen kann. Vorzugsweise ist der Hydraulikbus als geradlinig horizontal verlegtes Element vorgesehen, ebenso wie der Elektrobus. Die Schnellkupplungsverbindungen können in der Weise ausgebildet sein, daß beispielsweise konische Führungszapfen vorgesehen sind, die als Vorzentrierung dienen und bis zu einem Endanschlag in eine entsprechende Aufnahme eingeschoben werden können, in der sie dann verriegelt werden. Die Verriegelung kann beispielsweise mittels einer Spannschraube oder eines Spannhebels erfolgen. Die Verbindungen der elektrischen Elemente können in Form von Steckern und Kupplungen ausgebildet sein. Ebenso können an der Elektroinstallation Steckverbindungsmittel für Datenleitungen ausgebildet sein.

Ausführungsbeispiele der Erfindung sind in der Zeichnung gezeigt und im folgenden näher beschrieben. Es zeigt:

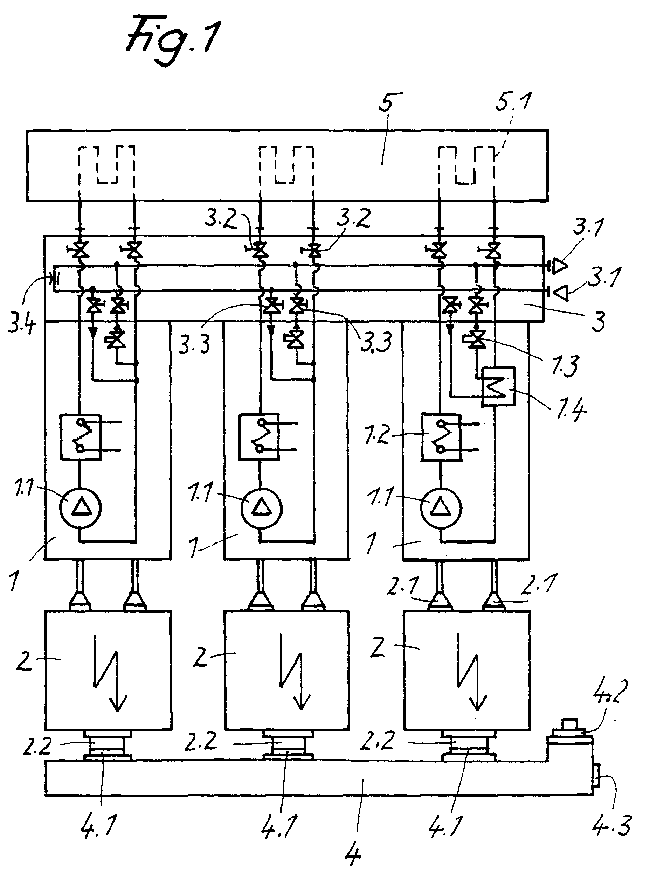

- Figur 1: ein erfindungsgemäß aufgebautes Mehrkreistemperiersystem schematisch mit drei Kreisen;
- Figur 2: einen Ausschnitt gemäß Figur 1 in Variante;
- Figur 3: eine weitere Variante in gleicher Ansicht wie Figur 2;
- Figur 4: eine Einzelheit in Ansicht;
- Figur 5: eine weitere Einzelheit in Ansicht;
- Figur 6: eine Darstellung in Seitenansicht.

In der Zeichnung ist ein Mehrkreistemperiersystem zur Temperierung von Werkzeugen für die Spritzgießtechnik gezeigt. Dabei ist ein Verbraucher 5 mit Temperierkanälen 5.1 gezeigt.

Das Temperiersystem ist modulartig aufgebaut und besteht aus folgenden Bestandteilen:

Temperiergerät-Hydraulikeinheiten 1, Temperiergerät-Elektroeinheiten 2 einer Businstallationsleitung (Hydraulikbus 3) für Zu-und Ableitung von Temperiermittel, einer Elektrobusinstallationsleitung (Elektrobus 4) mit elektrischen Zu- und Ableitungen.

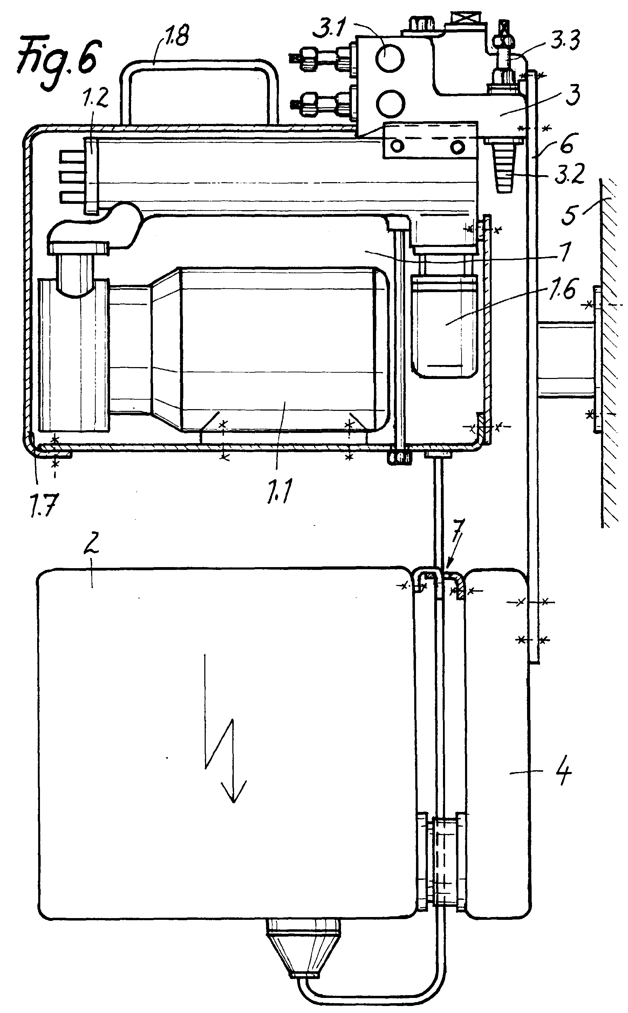

Die Temperiergerät-Elektroeinheiten 2 sind über Steckkupplungen 2.2 an den Elektrobus 4 beziehungsweise Elektrosteckdosen 4.1 des Elektrobusses 4 angeschlossen. Der Elektrobus 4 weist zusätzlich einen Hauptschalter 4.2 für alle Stromkreise und eine Stromeinführung 4.3 auf. Die Temperiergerät-Elektroeinheiten sind über eine Kabelverbindung mit Steckerverbindung 2.1 an die Temperiergerät-Hydraulikeinheiten 1 angekuppelt. Diese Temperiergerät-Hydraulikeinheiten 1 wiederum sind leicht lösbar über Steckkupplungen an den Hydraulikbus 3 angekuppelt. Jede Temperiergerät-Hydraulikeinheit 1 weist beispielsweise eine Pumpe zum Umpumpen des Fluids (beispielsweise Kühlwasser) auf, die mit 1.1 bezeichnet ist. Zusätzlich weist jede Temperiergerät-Hydraulikeinheit 1 eine Heizung 1.2, ein Kühlwasserregelventil 1.3 und gegebenenfalls auch einen Wärmetauscher 1.4 auf. Der Hydraulikbus 3 weist mindestens einen Kühlmitteleintritt und -austritt 3.1 auf, der ein durch die gesamte Buslänge verlaufendes Kanalsystem speist. Ferner weist der Hydraulikbus 3 eine Absperrung 3.2 für Umlaufwasser auf, so daß der Verbraucher 5 durch Absperren dieser Absperrungen 3.2 und der Absperrungen 3.3 zur Trennung von Hydraulikbus von Hydraulik-Einheit 1 abgetrennt ist. Desweiteren weist der Hydraulikbus einen Bypasskanal 3.4 auf, durch den der Kühlwassereintrittskanal mit dem Kühlwasseraustrittskanal verbunden ist. Wie insbesondere anhand Figur 6 verdeutlicht, ist der Hydraulikbus 3 durch eine Halterung 6 an einen Verbraucher 5 befestigt. An dieser Halterung oder auch einer anderen Halterung kann auch der Elektrobus 4 gehaltert sein. Wie aus der Abbildung 6 ersichtlich, kann an der Halterung 6 die Fixierung der beiden Buselemente 3 und 4 erfolgen, wobei die Elektroeinheit 2 bei 7 an den Elektrobus angehängt ist und ansonsten über die Steckkupplungen mit dem Elektrobus verbunden ist. Die Hydraulikeinheit 1 ist unmittelbar an den Hydraulikbus 3 angeschlossen und an diesen befestigt (leicht lösbar mittels Steckkupplungen).

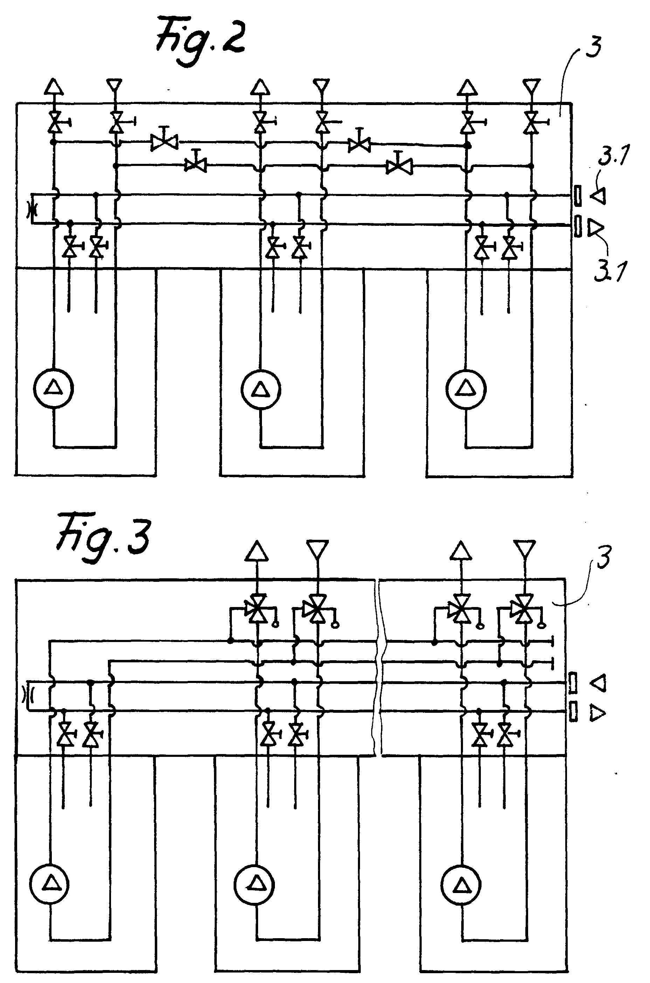

Bei der Ausbildung nach Figur 2 weist der Hydraulikbus zusätzliche Ventilsysteme zur Zusammenschaltung von mehreren Temperierkreisen zum Zwecke der Leistungsvervielfachung auf.

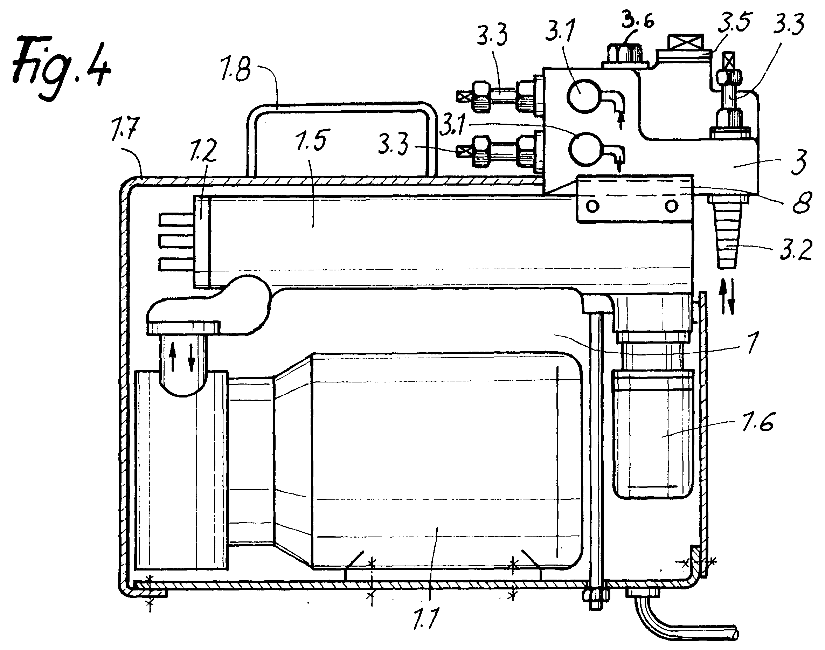

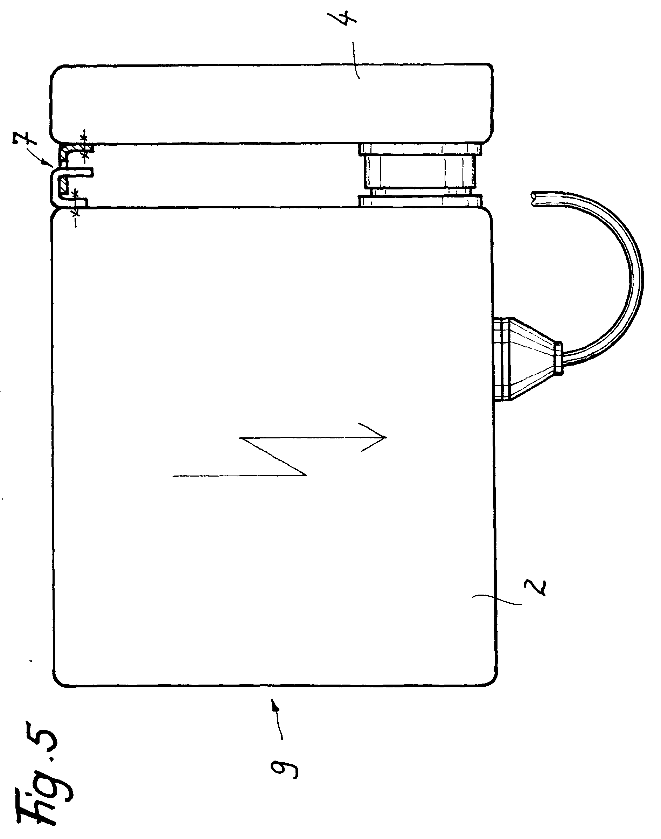

Bei der Darstellung gemäß Figur 3 weist der Hydraulikbus 3 ein Ventilsystem zur Umschaltung auf einen Reservekreis auf. In der Figur 4 ist der Hydraulikbus 3 mit den Kühlwasservor- und Rücklaufkanälen 3.1, den Umlaufwasservor- und Rücklaufanschlüssen 3.2, Absperrorganen 3.3, einem Filter 3.5 und einem Spannelement 3. 6 gezeigt. Ferner ist das Temperiergerät 1 mit der Pumpe 1.1, einem Funktionsblock 1.5, einem Regelventil 1.6, einem Heizeinsatz 1.2, einer Gehäuseverkleidung 1.7 und einem Montagegriff 1.8 gezeigt. Bei 8 ist ein Führungssystem für die Ankopplung des Temperiergerätes 1 an den Hydraulikbus 3 gezeigt. In Figur 5 ist der Elektrobus 4 und die Temperiergerät-Elektroeinheit 2 gezeigt. Bei 7 ist die Halterung der Teile aneinander verdeutlicht. Bei 9 ist die Bedienseite der Elektroeinheit gezeigt, die mit Tastaturen oder auch Anzeigen versehen sein kann.

Die Erfindung ist nicht auf die Ausführungsbeispiele beschränkt, sondern im Rahmen der Offenbarung vielfach variabel.

Alle neuen, in der Beschreibung und/oder Zeichnung offenbarten Einzel- und Kombinationsmerkmale werden als erfindungswesentlich angesehen.

## Patentansprüche

1. Mehrkreistemperiersystem zur Temperierung von Verbrauchern, insbesondere Werkzeugen für die Spritzgußtechnik mit an Temperierkanäle der Verbraucher anschließbaren Temperiergeräten mit Kühlmittelanschluß, Elektroanschluß, Umpumpeinrichtung, Heizung, Kühlung und Regelung für jeden Temperierkreis beziehungsweise -kanal, **dadurch gekennzeichnet, daß** das Temperiersystem modulartig aufgebaut ist und aus folgenden Bestandteilen besteht:
Temperiergerät-Hydraulikeinheiten (1), Temperiergerät-Elektroeinheiten (2), einem Hydraulikbus (3) für Zu- und Ableitung von Temperiermittel, einem Elektrobus (4) mit elektrischen Zu- und Ableitungen, wobei mehrere Temperiergerät-Elektroeinheiten (2) an den Elektrobus (4) leicht lösbar ankoppelbar sind, die Temperiergerät-Elektroeinheiten (2) leicht lösbar mit den Temperiergerät-Hydraulikeinheiten (1) direkt oder über Anschlußkabel kuppelbar sind und die Temperiergerät-Hydraulikeinheiten (1) leicht lösbar an den Hydraulikbus (3) ankoppelbar sind, der an die Temperierkanäle (5.1) des oder der Verbraucher (5) angeschlossen ist.

2. Mehrkreistemperiersystem nach Anspruch 1, **dadurch gekennzeichnet, daß** jede Temperiergerät-Hydraulik-einheit (1) eine Pumpe (1.1), eine Heizung (1.2), ein Kühlwasserregelventil (1.3) und gegebenenfalls einen Wärmetauscher (1.4) aufweist.

3. Mehrkreistemperiersystem nach Anspruch 1 oder 2, **dadurch gekennzeichnet, daß** jede Temperier-Elektro-einheit (2) neben der Elektrik und Elektronik zur Steuerung der Hydraulikeinheit (1) Steckverbindungsmittel (2.1,2.2) zum Anschluß an den Elektrobus (4) und an die Hydraulikeinheit (1) aufweist.

4. Mehrkreistemperiersystem nach einem der Ansprüche 1 bis 3, **dadurch gekennzeichnet, daß** der Hydraulikbus (3) einen Kühlmitteleintritt, - austritt (3.1), eine Absperrung (3.2) für Umlauffluid, eine Absperrung (3.3) für Kühlmittel und einen Bypasskanal (3.4) aufweist, der den Kühlwassereintrittskanal mit dem Austrittskanal verbindet.

5. Mehrkreistemperiersystem nach einem der Ansprüche 1 bis 4, **dadurch gekennzeichnet, daß** der Hydraulikbus (3) Ventilsysteme enthält, die es gestatten, zur Leistungserhöhung Temperiergeräte-Hydraulikeinheiten (1) auf einen Verbraucherkreis (5.1) zusammenzuschalten. (Fig. 2).

6. Mehrkreistemperiersystem nach einem der Ansprüche 1 bis 5, **dadurch gekennzeichnet, daß** der Hydraulikbus (3) Ventilsysteme enthält, die es gestatten, Verbraucherkreise (5.1) auf eine Reserve-Temperiergeräte-Hydraulikeinheit (1) zu schalten. (Fig. 3).

7. Mehrkreistemperiersystem nach einem der Ansprüche 1 bis 6, **dadurch gekennzeichnet, daß** zur Erweiterung des Hydraulikbusses (3) und damit zur Erhöhung der ankuppelbaren Hydraulikeinheiten an den Hydraulikbus (3) an der Seite der Bypaßleitung (3,4) des Hydraulikbusses (3) ein zusätzlicher Kühlmitteleingang und -ausgang (3.1) vorhanden ist.

8. Mehrkreistemperiersystem nach einem der Ansprüche 1 bis 7, **dadurch gekennzeichnet, daß** der Hydraulikbus (3) mittels einer Halterung (6) an einem Verbraucher (5) oder mehreren Verbrauchern (5) fixiert ist und mit den absperrbaren Umlaufanschlüssen (3.2) an Temperierkanäle (5.1) der Verbraucher (5) oder des Verbrauchers (5) angeschlossen ist.

9. Mehrkreistemperiersystem nach einem der Ansprüche 1 bis 8, **dadurch gekennzeichnet, daß** der Hydraulikbus (3) an den Anschlußstellen der Hydraulikeinheiten (1) Anschlußkanäle aufweist, die mit Temperierkanälen eines Verbrauchers (5) in Verbindung stehen.
